# EUROPÄISCHE PATENTSCHRIFT

(11) **EP 2 297 549 B1**
(45) Veröffentlichungstag und Bekanntmachung des Hinweises auf die Patenterteilung: **06.01.2016**
(21) Anmeldenummer: 09772080.9
(22) Anmeldetag: 12.06.2009
(51) Int. Cl.: G01C 21/36, G08G 1/09, G08G 1/0962

(54) **KRAFTFAHRZEUG-NAVIGATIONSSYSTEM**
NAVIGATION SYSTEM FOR MOTOR VEHICLES
SYSTÈME DE NAVIGATION DE VÉHICULE MOTORISÉ

(30) Priorität: 04.07.2008 DE 102008031717
(43) Veröffentlichungstag der Anmeldung: 23.03.2011
(73) Patentinhaber: Bayerische Motoren Werke Aktiengesellschaft, 80809 München (DE)
(72) Erfinder: KUENZNER, Hermann, 85356 Freising (DE); DISTLER, Armin, 81377 München (DE); STEINS, Wilfried, 85737 Ismaning (DE)
(86) Internationale Anmeldenummer: PCT/EP2009/004239
(87) Internationale Veröffentlichungsnummer: WO 2010/000380

(56) Entgegenhaltungen:
- JP-A- 6 110 384
- JP-A- 9 292 831
- JP-A- 2000 231 328

## Beschreibung

Die Erfindung betrifft ein Kraftfahrzeug-Navigationssystem.

Mit Navigationssystemen ist es möglich, eine Route zwischen einem Startpunkt und einem Zielpunkt zu berechnen. Dabei ist es bekannt, Verkehrsstörungen meldende Verkehrsnachrichten zu empfangen und diese in Listenform anzuzeigen oder entsprechende Symbole der Darstellung einer digitalen Straßenkarte zu überlagern.

Es stellte sich dabei als Nachteil heraus, dass bei einer Darstellung der digitalen Karte in kleinem Maßstab, also bei schwacher Verkleinerung, vom aktuellen Aufenthaltsort weiter entferne Verkehrsstörungen auf der Kartendarstellung nicht angezeigt werden können. Erfolgt die Darstellung der digitalen Karte in größerem Maßstab, also bei stärkerer Verkleinerung, werden so viele Symbole auf der Straßenkartendarstellung angezeigt, dass ein Nutzer den Überblick verliert. Außerdem ist dann der genaue Ort, die Art und die Schwere der Verkehrsstörungen häufig nicht mehr zu erfassen.

Aus der JP2000231328 A ist ein Navigationssystem bekannt zum Empfang von Verkehrsnachrichten mit einer Anzeigeeinrichtung, zum Anzeigen von Verkehrsnachrichten nacheinander.

Der Erfindung liegt nun die Aufgabe zugrunde, ein verbessertes Kraftfahrzeug-Navigationssystem anzugeben.

Diese Aufgabe wird durch die Merkmale der unabhängigen Ansprüche gelöst. Vorteilhafte Weiterbildungen der Erfindung sind den abhängigen Ansprüchen zu entnehmen.

Ein erfindungsgemäßes Kraftfahrzeug-Navigationssystem umfasst eine Empfangseinrichtung zum Empfang von Verkehrsnachrichten, denen jeweils ein Ortsinformationsobjekt, wie beispielsweise Ortskoordinaten und/oder ein geografischer Bereich und/oder ein Straßenabschnitt, zugeordnet ist. Auf einer Anzeigeeinrichtung, wie einem Grafikdisplay, kann zumindest ausschnittsweise eine digitale Straßenkarte angezeigt werden. Eine Steuereinrichtung, die auch eine Verkehrsnachrichten-Speichereinrichtung umfassen kann, ist derart mit der Empfangseinrichtung und der Anzeigeeinrichtung gekoppelt und hardwaretechnisch und/oder programmtechnisch derart eingerichtet, dass, insbesondere zeitlich, nacheinander, insbesondere direkt aufeinanderfolgend, die Ausschnitte einer digitalen Straßenkarte angezeigt werden, auf welche sich die Verkehrsnachrichten beziehen. Andere, insbesondere dazwischen liegende und/oder nicht verkehrsgestörte, Straßenabschnitte oder Ausschnitte einer digitalen Straßenkarte werden dazwischen nicht angezeigt. Es ist vorgesehen, dass auf der Anzeigeeinrichtung

neben den nacheinander, insbesondere in einem Vorschaubereich, dargestellten Ausschnitten einer digitalen Straßenkarte, auf welche sich die Verkehrsnachrichten beziehen, insbesondere in einem Verkehrsmeldungsbereich, den Verkehrsnachrichten jeweils zugeordnete Detailinformationsobjekte, beispielsweise Ortsinformationen, Informationen über die mit der Verkehrsstörung verbundene zeitliche Verzögerung, eine Straßenbezeichnung, eine Ursache einer Verkehrsstörung, eine Art der Verkehrsstörung und/oder eine Länge der Verkehrsstörung, angezeigt werden. Die Detailinformationsobjekte mehrerer Verkehrsnachrichten können gleizeitig in Form einer Liste, beispielsweise im Sinn einer an sich bekannten Verkehrsmeldungsliste, dargestellt werden. Von den Listeneinträgen können dabei alle, ein Teil oder immer nur einer gleichzeitig dargestellt werden.

Dadurch wird erreicht, dass ein Fahrer auch bei weit voneinander entfernt vorkommenden Verkehrsstörungen auf komfortable Art und Weise, schnell, umfassend und eingängig über diese Verkehrsstörungen informiert wird. Diese Vorteile werden durch die folgenden Weiterbildungen noch verstärkt.

Vorzugsweise werden nacheinander die Ausschnitte einer digitalen Straßenkarte angezeigt, welche durch die den Verkehrsnachrichten zugeordneten Ortsinformationsobjekte bestimmt sind. Es werden beispielsweise nur die Ausschnitte angezeigt, welche die verkehrsgestörten Straßenabschnitte umfassen.

Vorzugsweise wird der Maßstab der Darstellung des Ausschnitts der digitalen Straßenkarte automatisch derart eingestellt, dass der verkehrsgestörte Straßenabschnitt, auf welchen sich die Verkehrsnachricht bezieht komplett dargestellt wird.

Gemäß einer Weiterbildung der Erfindung ist durch eine Bedienaktion, beispielsweise durch das Drücken einer Taste oder das Drehen eines Drehelementes, ein Detailinformationsobjekt markierbar. Durch eine Markierung eines Detailinformationsobjektes wird der entsprechende, insbesondere der der entsprechenden Verkehrsnachricht zugeordnete, Ausschnitt der digitalen Straßenkarte angezeigt. Vorzugsweise ist mit der Markierung eines Detailinformationsobjektes eine Anzeige von zusätzlichen Informationen zu dem Detailinformationsobjekt verbunden. Diese Anzeige kann zeitlich begrenzt sein und/oder die Darstellung anderer Detailinformationsobjekte überlagern oder überdecken.

Bevorzugt ist vorgesehen, dass durch aufeinanderfolgende identische Bedienaktionen durch die Ausschnitte einer digitalen Straßenkarte, auf welche sich die Verkehrsnachrichten beziehen, geblättert wird.

Vorzugsweise wird auf der Anzeigeeinrichtung neben den nacheinander in einem Vorschaubereich gemäß einem ersten Maßstab dargestellten Ausschnitten einer digitalen Straßenkarte, auf welche sich die Verkehrsnachrichten beziehen, ein weiterer Ausschnitt (Übersichtssausschnitt) der digitalen Straßenkarte gemäß einem zweiten Maßstab dargestellt, wobei der erste Maßstab (z.B. 1:500) kleiner ist als der zweite Maßstab (z.B. 1:1000). Die Verkleinerung der ersten Darstellung ist also nicht so stark wie die Verkleinerung der zweiten Darstellung. Alternativ oder ergänzend dazu kann der erste Maßstab automatisch entsprechend der geografischen Ausdehnung der durch die Verkehrsmeldung beschriebenen Verkehrsstörung so gewählt werden, dass das von der Verkehrsstörung betroffene Gebiet ganz oder zu einem vorgegebenen Teil angezeigt wird.

Dabei kann in dem Übersichtssausschnitt jeweils der Bereich markiert oder hervorgehoben dargestellt sein, der dem in dem Vorschaubereich dargestellten Ausschnitt der Straßenkarte entspricht.

Eine Weiterbildung ist es, dem weiteren Ausschnitt (Übersichtssausschnitt) überlagert den Verkehrsnachrichten zugeordnete Symbole anzuzeigen.

Besonders bevorzug ist vorgesehen, lediglich oder bevorzugt Detailinformationsobjekte und/oder Ausschnitte einer digitalen Straßenkarte zu Verkehrsnachrichten, die sich auf eine aktuelle Route beziehen, anzuzeigen. Insbesondere bezeichnet im Rahmen der Erfindung der Begriff "Verkehrsnachrichten" Verkehrsnachrichten, die auf der aktuellen, beispielsweise durch das Navigationssystem bestimmten, Route liegen oder sich darauf beziehen.

Vorzugsweise wird automatisch immer der Ausschnitt einer digitalen Straßenkarte angezeigt, auf den sich die nächste auf der aktuellen Route befindliche Verkehrsnachricht bezieht. Sobald dieser Bereich oder der entsprechende Straßenabschnitt ganz oder teilweise passiert ist, wird der Ausschnitt der digitalen Straßenkarte angezeigt, auf den sich die nächste auf der aktuellen Route befindliche Verkehrsnachricht bezieht.

Im Folgenden wird die Erfindung anhand von Beispielen unter Bezugnahme auf die folgende Figur näher erläutert:

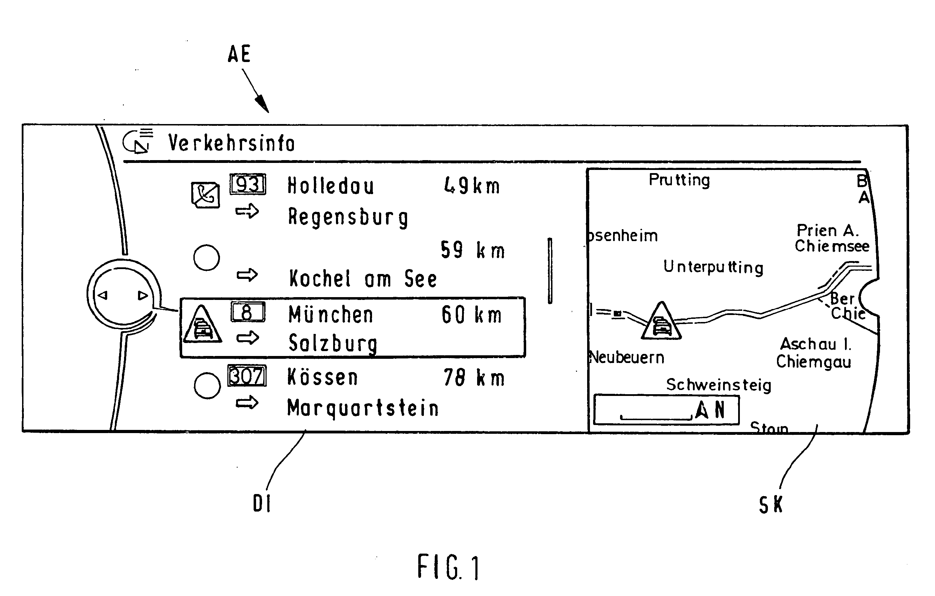

- Figur 1: zeigt eine Darstellung von verkehtsnachrichtenbezogenen Informationen auf der Anzeigeeinrichtung eines Navigationssystems.

Es wird von einem an sich bekannten Kraftfahrzeug-Navigationssystem ausgegangen, das in der Lage ist Verkehrsnachrichten zu empfangen. Eine Verkehrsnachricht umfasst ein Ortsinformationsobjekt, wie Informationen über den Ort einer Verkehrsstörung, und zumindest ein Detailinformationsobjekt, wie beispielsweise, Informationen über die Art der Verkehrsstörung. Das Ortsinformationsobjekt kann dabei auch Teil des Detailinformationsobjektes sein.

In Figur 1 ist eine Anzeige AE eines Kraftfahrzeug-Navigationssystems dargestellt. Auf der rechten Seite ist in einem Vorschaubereich ein Ausschnitt einer digitalen Straßenkarte SK dargestellt. Dieser Ausschnitt bezieht sich auf eine aktuelle empfangene und/oder zwischengespeicherte Verkehrsnachricht. Der dargestellte Ausschnitt resultiert aus dem der Verkehrsnachricht zugeordneten Ortinformationsobjekt und/oder Detailinformationsobjekt.

Neben dem Vorschaubereich sind auf der linken Seite mehrere Detailinformationsobjekte DI verschiedener Verkehrsnachrichten gleichzeitig in Form einer Liste dargestellt. Durch eine oder mehrere Bedienaktionen ist ein Detailinformationsobjekt, wie hier beispielsweise das eingerahmte Detailinformationsobjekt, das sich auf eine Verkehrsstörung auf der A8 zwischen München und Salzburg bezieht, markierbar. Durch die Markierung dieses Detailinformationsobjektes wird auf der rechten Seite automatisch der entsprechende von dieser Verkehrsstörung betroffene Ausschnitt der digitalen Straßenkarte angezeigt.

Durch aufeinanderfolgende identische Bedienaktionen, beispielsweise das Drehen eines Drehelementes um einen vorgegebenen Winkel, kann durch die Liste der Detailinformationsobjekte gescrollt werden oder kann ein Detailinformationsobjekt nach dem anderen (oder eine Verkehrsnachricht nach der anderen) markiert bzw. ausgewählt werden, und damit automatisch durch die Ausschnitte der digitalen Straßenkarte, auf welche sich die Detailinformationsobjekte oder Verkehrsnachrichten beziehen, geblättert werden.

Alternativ zur Listendarstellung der Detailinformationsobjekte oder Verkehrsnachrichten ist vorgesehen, neben den nacheinander in einem Vorschaubereich dargestellten Ausschnitten einer digitalen Straßenkarte, auf welche sich die Verkehrsnachrichten beziehen, einen Übersichtsausschnitt der digitalen Straßenkarte darzustellen. Diese Darstellung des Übersichtsausschnittes erfolgt dabei der besseren Übersichtlichkeit wegen gemäß einem größeren Maßstab als die Darstellung der Straßenkartenausschnitte im rechten Vorschaubereich.

Der Darstellung des Übersichtsausschnittes können dabei in an sich bekannter Weise gleichzeitig mehrere den Verkehrsnachrichten zugeordnete Symboldarstellungen überlagert werden.

## Patentansprüche

1. Kraftfahrzeug-Navigationssystem
- mit einer Empfangseinrichtung zum Empfang von Verkehrsnachrichten, denen jeweils ein Ortsinformationsobjekt zugeordnet ist,
- mit einer Anzeigeeinrichtung zum Anzeigen einer digitalen Straßenkarte und
- mit einer Steuereinrichtung, die derart mit der Empfangseinrichtung und der Anzeigeeinrichtung gekoppelt ist, und die derart eingerichtet ist,
- dass nacheinander die Ausschnitte einer digitalen Straßenkarte angezeigt werden, auf welche sich die Verkehrsnachrichten beziehen, **dadurch gekennzeichnet**
- **dass** auf der Anzeigeeinrichtung neben den nacheinander, insbesondere in einem Vorschaubereich, dargestellten Ausschnitten einer digitalen Straßenkarte, auf welche sich die Verkehrsnachrichten beziehen, den Verkehrsnachrichten jeweils zugeordnete Detailinformationsobjekte angezeigt werden, wobei ein Detailinformationsobjekt Ortsinformationen, Informationen über die mit der Verkehrsstörung verbundene zeitliche Verzögerung, eine Straßenbezeichnung, eine Ursache einer durch die Verkehrsnachricht gemeldeten Verkehrsstörung, eine Art der durch die Verkehrsnachricht gemeldeten, Verkehrsstörung und/oder eine Länge der durch die Verkehrsnachricht gemeldeten Verkehrsstörung umfasst, und wobei ein Ortsinformationsobjekt Ortskoordinaten und/oder Informationen über einen geografischen Bereich und/oder Informationen über einen Straßenabschnitt umfasst.

2. Kraftfahrzeug-Navigationssystem nach Anspruch 1,
bei dem nacheinander die Ausschnitte einer digitalen Straßenkarte angezeigt werden, welche durch den Verkehrsnachrichten zugeordnete Ortsinformationsobjekte bestimmt sind.

3. Kraftfahrzeug-Navigationssystem nach einem der vorhergehenden Ansprüche,
bei dem die Detailinformationsobjekte mehrerer Verkehrsnachrichten gleichzeitig in Form einer Liste dargestellt werden.

4. Kraftfahrzeug-Navigationssystem nach einem der vorhergehenden Ansprüche,
bei dem durch eine Bedienaktion ein Detailinformationsobjekt markierbar ist, und
bei dem durch eine Markierung eines Detailinformationsobjekt der entsprechende Ausschnitt der digitalen Straßenkarte angezeigt wird.

5. Kraftfahrzeug-Navigationssystem nach einem der vorhergehenden Ansprüche,
bei dem durch aufeinanderfolgende identische Bedienaktionen durch die Ausschnitte einer digitalen Straßenkarte, auf welche sich die Verkehrsnachrichten beziehen, geblättert wird.

6. Kraftfahrzeug-Navigationssystem nach einem der Ansprüche 1,2,4 oder 5,
bei dem auf der Anzeigeeinrichtung neben den nacheinander in einem Vorschaubereich dargestellten Ausschnitten einer digitalen Straßenkarte, auf welche sich die Verkehrsnachrichten beziehen, in einem ersten Maßstab ein weiterer Ausschnitt der digitalen Straßenkarte in einem zweiten Maßstab dargestellt wird, wobei der erste Maßstab kleiner ist als der zweite.

7. Kraftfahrzeug-Navigationssystem nach Anspruch 6,
bei dem dem weiteren Ausschnitt überlagert den Verkehrsnachrichten zugeordnete Symbole angezeigt werden.

8. Kraftfahrzeug-Navigationssystem nach einem der vorhergehenden Ansprüche,
bei dem lediglich Detailinformationsobjekte und/oder Ausschnitte einer digitalen Straßenkarte zu Verkehrsnachrichten, die sich auf eine aktuelle Route beziehen, angezeigt werden.

9. Kraftfahrzeug-Navigationssystem nach einem der vorhergehenden Ansprüche,
bei dem automatisch der Ausschnitt einer digitalen Straßenkarte angezeigt wird, auf den sich die nächste auf der aktuellen Route befindliche Verkehrsnachricht bezieht.

## Claims

1. A navigation system for a motor vehicle, comprising
- a receiving means for receiving traffic reports, to which a location information object is respectively allocated,
- a display means for displaying a digital road map, and
- a control means which is coupled to the receiving means and to the display means and is configured such that
- the sectors of a digital road map, to which the traffic reports relate, are successively displayed, **characterised in that**
- detailed information objects which are respectively allocated to the traffic reports are displayed on the display means in addition to the sectors of a digital road map which are shown successively, more especially in a preview area and to which the traffic reports relate, a detailed information object comprising location information, information about the time delay associated with the traffic disruption, the road name, the cause of the traffic disruption announced in the traffic report, the nature of the traffic disruption announced in the traffic report and/or the length of the traffic disruption announced in the traffic report, and a location information object comprising location coordinates and/or information about a geographical region and/or information about a section of the road.

2. A navigation system for a motor vehicle according to claim 1, wherein the sectors of a digital road map which are determined by location information objects allocated to the traffic reports are displayed successively.

3. A navigation system for a motor vehicle according to either of the preceding claims, wherein the detailed information objects of a plurality of traffic reports are simultaneously displayed in the form of a list.

4. A navigation system for a motor vehicle according to any one of the preceding claims, wherein a detailed information object can be marked by an operating action and wherein the corresponding sector of the digital road map is displayed by a marking of a detailed information object.

5. A navigation system for a motor vehicle according to any of the preceding claims, wherein the sectors of a digital road map to which the traffic reports relate are browsed by successive identical operating actions.

6. A navigation system for a motor vehicle according to any one of claims 1, 2, 4 or 5, wherein in addition to the sectors of a digital road map to which the traffic reports relate and which are successively displayed in a preview area on a first scale, a further sector of the digital road map is displayed on a second scale on the display means, the first scale being smaller than the second.

7. A navigation system for a motor vehicle according to claim 6, wherein symbols allocated to the traffic reports are displayed superimposed on the further sector.

8. A navigation system for a motor vehicle according to any one of the preceding claims, wherein only detailed information objects and/or sectors of a digital road map concerning traffic reports relating to a current route are displayed.

9. A navigation system for a motor vehicle according to any one of the preceding claims, wherein the sector of a digital road map to which the next traffic report on the current route relates is displayed automatically.

## Revendications

1. Système de navigation de véhicule automobile comprenant
- une installation de réception pour recevoir des messages de circulation auxquels sont associés des objets informations de lieux,
- une installation d'affichage pour afficher une carte routière numérique, et
- une installation de commande couplée à l'installation de réception et à l'installation d'affichage et conçue pour
- afficher successivement des extraits d'une carte routière numérique auxquels se réfèrent les messages de circulation, **caractérisé en ce que**
sur l'installation d'affichage à côté des extraits de la carte routière numérique affichés par, les uns à la suite des autres, notamment dans une zone tournée vers l'avant, auxquels se réfèrent les messages de circulation sont affichés les objets d'information détaillés associés aux messages de circulation respectifs,
- les objets d'information détaillés comportent des informations de lieux, des informations concernant le retard lié à une perturbation de circulation, une dénomination de rue/route, la cause de la perturbation de circulation signalée par le message de circulation, la nature de la perturbation de la circulation signalée comme message de circulation et/ou la durée de la perturbation de circulation signalée par le message de circulation, et
- l'objet d'information de lieu contient les coordonnées du lieu et/ou des informations concernant la zone géographique et/ou des informations concernant un segment de route.

2. Système de navigation selon la revendication 1,
dans lequel successivement sont affichés des extraits d'une carte routière numérique, extraits concernés par les objets d'information de lieux associés aux messages de circulation.

3. Système de navigation selon l'une des revendications précédentes,
dans lequel les objets d'information détaillés présentent plusieurs messages de circulation simultanément sous la forme d'une liste.

4. Système de navigation selon l'une des revendications précédentes, dans lequel par une action, on marque un objet d'information détaillé, et
- en marquant cet objet d'information détaillé, on indique le segment correspondant de la carte routière numérique.

5. Système de navigation selon l'une des revendications précédentes,
dans lequel par des actions de manoeuvres identiques répétées on feuillette les extraits de la carte routière numérique à laquelle se rapportent les informations de circulation.

6. Système de navigation selon l'une des revendications 1, 2, 4 ou 5,
dans lequel à côté des extraits présentés successivement dans la zone tournée vers l'avant d'une carte routière numérique sur l'installation d'affichage, et auxquels se rapportent les messages de circulation, dans une première échelle, un autre extrait de la carte numérique est présenté à une seconde échelle, la première échelle étant inférieure à la seconde.

7. Système de navigation selon la revendication 6,
dans lequel l'autre extrait affiche en surimpression les messages de circulation concernés.

8. Système de navigation selon l'une quelconque des revendications précédentes,
dans lequel sont affichés uniquement les objets d'information détaillés et/ou les extraits d'une carte routière numérique auxquels se rapportent les messages de circulation concernant le trajet présent.

9. Système de navigation selon l'une des revendications précédentes,
dans lequel est affiché automatiquement l'extrait de la carte routière numérique concerné par le message de circulation le plus proche sur le trajet actuel.
